# FASCICULE DE BREVET EUROPEEN

(11) **EP 3 802 638 B1**
(45) Date de publication et mention de la délivrance du brevet: **11.09.2024**
(21) Numéro de dépôt: 19737824.3
(22) Date de dépôt: 27.05.2019
(51) Int. Cl.: C08F 210/02, C08L 23/08, B60C 1/00

(54) **COPOLYMERE D'ETHYLENE ET D'ISOPRENE**
ETHYLEN- UND ISOPRENCOPOLYMER
ETHYLENE AND ISOPRENE COPOLYMER

(30) Priorité: 06.06.2018 FR 1854911
(43) Date de publication de la demande: 14.04.2021
(73) Titulaire: COMPAGNIE GENERALE DES ETABLISSEMENTS MICHELIN, 63000 Clermont-Ferrand (FR)
(72) Inventeur: ARAUJO DA SILVA, José-Carlos, 63040 CLERMONT-FERRAND Cedex 9 (FR); LAFAQUIERE, Vincent, 63040 CLERMONT-FERRAND Cedex 9 (FR); MORESO, Emma, 63040 CLERMONT-FERRAND Cedex 9 (FR); THUILLIEZ, Julien, 63040 CLERMONT-FERRAND Cedex 9 (FR); TRIGUEL, Aurélie, 63040 CLERMONT-FERRAND Cedex 9 (FR)
(74) Mandataire: M.F.P. Michelin
(86) Numéro de dépôt international: PCT/FR2019/051225
(87) Numéro de publication internationale: WO 2019/234324

(56) Documents cités:
- WO-A1-2018/020123
- WO-A1-2018/048533
- CN-A- 101 792 498

## Description

Le domaine de l'invention est celui des copolymères diéniques riches en unité éthylène utilisables en tant qu'élastomères dans une composition de caoutchouc pour pneumatique.

Les élastomères diéniques les plus largement utilisés dans la confection des pneumatiques sont les polybutadiènes, les polyisoprènes, en particulier le caoutchouc naturel, et les copolymères de 1,3-butadiène et de styrène. Le point commun à ces élastomères est la forte proportion molaire d'unités diéniques dans l'élastomère, généralement très supérieure à 50%, ce qui peut les rendre sensibles à l'oxydation, notamment sous l'action de l'ozone.

La Demanderesse a décrit des élastomères qui a contrario sont relativement pauvres en unités diéniques, notamment en vue de réduire leur sensibilité aux phénomènes d'oxydation. Ces élastomères qui sont par exemples décrits dans les documents WO 2007054223 A1 et WO 2007054224 A1 sont des copolymères de 1,3-butadiène et d'éthylène contenant plus de 50% en mole d'unité éthylène. Ces élastomères sont qualifiés d'élastomères diéniques riches en éthylène.

Or il se trouve que les copolymères d'éthylène et de 1,3-diène deviennent cristallins lorsque la proportion d'éthylène dans le copolymère devient importante. La fusion des parties cristallines du copolymère entraînant une baisse de sa rigidité, une composition de caoutchouc contenant un tel copolymère et utilisée dans un pneumatique voit aussi sa rigidité diminuer lorsqu'elle est portée à des températures égalant ou dépassant la température de fusion des parties cristallines, ce qui peut être le cas pendant les phases répétées de freinage et d'accélération du pneumatique. Cette dépendance de la rigidité en fonction de la température peut donc entraîner des fluctuations non maîtrisées des performances du pneumatique. Il est d'intérêt de disposer de polymères diéniques riches en unités éthylène dont la cristallinité est réduite, voire supprimée.

Les copolymères décrits dans le document WO200754224 A1 présentent une cristallinité bien plus faible que leurs homologues décrits dans le document WO200754223 A1. Ils se différencient par leur microstructure, en particulier par la présence de motifs hydrocarbonés cycliques à 6 membres. Ces copolymères sont préparés en présence d'un système catalytique à base d'un métallocène de formule (1) et d'un organomagnésien, comme cela est décrit par exemple dans le document WO 2007054224 A1,

P(Cp¹)(Cp²)Nd(BH₄)_{(1+y)-}L_{y}-Nₓ (1)

Cp¹ et Cp², identiques ou différents, étant choisis dans le groupe constitué par les groupes fluorényles substitués et le groupe fluorényle non substitué de formule C₁₃H₈, P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle, y, nombre entier, étant égal ou supérieur à 0, x, nombre entier ou non, étant égal ou supérieur à 0, L représentant un métal alcalin choisi dans le groupe constitué par le lithium, le sodium et le potassium, N représentant une molécule d'un éther, de préférence diéthyléther ou tétrahydrofuranne.

Par ailleurs, comme chacun le sait, la capacité d'une unité de production d'un polymère donné est liée à la productivité de l'unité de production. Un moyen pour augmenter la productivité d'une unité de production mettant en jeu une polymérisation en présence d'un système catalytique à base d'un métallocène est d'augmenter l'activité catalytique. Ce gain en activité catalytique est donc constamment recherché en vue de minimiser les coûts de production d'une unité de polymérisation et augmenter sa capacité de production.

Poursuivant son but de synthétiser des élastomères diéniques riches en éthylène de cristallinité réduite, la Demanderesse a découvert un nouveau copolymère qui permet de résoudre les problèmes mentionnés. En effet, le copolymère conforme à l'invention présente une cristallinité réduite, voire nulle, et est synthétisé avec une productivité bien plus élevée que ses homologues d'éthylène et de butadiène. Par ailleurs, comparativement à ses homologues que sont les copolymères d'éthylène et de butadiène, il confère des propriétés de cuisson améliorées aux compositions de caoutchouc renforcées.

Ainsi, un premier objet de l'invention est un copolymère, en particulier élastomère, d'éthylène et d'isoprène, lequel copolymère comprend de 10 à 35% en mole d'unités isoprène dont au moins 70% sont sous la configuration 3,4 et une partie est sous la configuration 1,2 , lequel copolymère a une température de transition vitreuse inférieure à -35°C.

Un autre objet de l'invention est un procédé de préparation du copolymère d'éthylène et d'isoprène conforme à l'invention qui comprend la copolymérisation d'éthylène et d'isoprène en présence d'un système catalytique à base au moins d'un métallocène de formule (I) et d'un organomagnésien de formule (II) :

P(Cp¹Cp²)Nd(BH₄)_{(1+y)-}L_{y}-Nₓ (I)

MgR¹R² (II)

- Cp¹ et Cp², identiques ou différents, étant choisis dans le groupe constitué par les groupes fluorényles substitués et le groupe fluorényle non substitué de formule C₁₃H₈,
- P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
- y, nombre entier, étant égal ou supérieur à 0,
- x, nombre entier ou non, étant égal ou supérieur à 0,
- L représentant un métal alcalin choisi dans le groupe constitué par le lithium, le sodium et le potassium,
- N représentant une molécule d'un éther, de préférence diéthyléther ou tétrahydrofuranne,
- R¹ et R², identiques ou différents, représentant un groupe carboné.

L'invention concerne aussi une composition de caoutchouc qui comprend l'élastomère conforme à l'invention, laquelle composition de caoutchouc comprend un système de réticulation ou une charge renforçante; ainsi qu'un pneumatique comprenant la composition de caoutchouc conforme à l'invention.

### I. DESCRIPTION DETAILLEE DE L'INVENTION

Dans la présente description, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression « à base de » utilisée pour définir les constituants d'un système catalytique ou d'une composition, on entend le mélange de ces constituants, ou le produit de la réaction d'une partie ou de la totalité de ces constituants entre eux.

Sauf indication contraire, les taux des unités résultant de l'insertion d'un monomère dans le copolymère sont exprimés en pourcentage molaire par rapport à la totalité des unités monomères du copolymère.

Les composés mentionnés dans la description peuvent être d'origine fossile ou biosourcés.

Dans ce dernier cas, ils peuvent être, partiellement ou totalement, issus de la biomasse ou obtenus à partir de matières premières renouvelables issues de la biomasse. Sont concernés notamment les monomères.

L'isoprène étant un 1,3 diène substitué, l'isoprène peut polymériser et donner lieu à des unités de configuration 1,2 , de configuration 3,4 et de configuration 1,4, respectivement de formule -(CH₂-CMe(CH=CH₂))-, -(CH₂-CH(CMe=CH₂))- et -(CH₂-CMe=CH-CH₂)-.

Comme cela est également bien connu, l'unité éthylène est une unité de motif -(CH₂-CH₂)-.

Le copolymère conforme à l'invention est un copolymère d'éthylène et d'isoprène, ce qui implique que les unités monomères du copolymère sont des unités résultant de la polymérisation de l'éthylène et de l'isoprène.

Le copolymère d'éthylène et d'isoprène conforme à l'invention a pour caractéristique essentielle de comprendre de 10 à 35% en mole d'unité isoprène, le copolymère comprenant alors de 65% à 90% en mole d'unité éthylène. De préférence, les unités isoprène représentent de 15 à 30% en mole des unités monomères du copolymère, c'est à dire les unités isoprène représentent de 15 à 30% en mole des unités isoprène et des unités éthylène du copolymère.

Dans le copolymère conforme à l'invention, au moins 70% en mole des unités isoprène sont sous la configuration 3,4. Les unités isoprène autre que les unités isoprène sous la configuration 3,4 peuvent être sous l'une des configurations 1,2 et 1,4, en particulier 1,4-trans.

Le copolymère conforme à l'invention a aussi pour autre caractéristique essentielle de contenir des unités isoprène sous la configuration 1,2.

Les unités isoprène sous la configuration 3,4 et les unités isoprène sous la configuration 1,2 représentent donc plus de 70% en mole des unités isoprène du copolymère. En d'autre terme, les unités isoprène qu'elles soient de configuration 1,2 ou 3,4 représentent plus de 70% en mole des unités isoprène. De manière préférentielle, les unités isoprène sous la configuration 3,4 et les unités isoprène sous la configuration 1,2 représentent au moins 75% en mole des unités isoprène du copolymère, ce qui revient à dire que les unités isoprène qu'elles soient de configuration 1,2 ou 3,4 représentent au moins 75% en mole des unités isoprène.

Selon l'un quelconque des modes de réalisation de l'invention, le taux molaire des unités isoprène sous la configuration 3,4 dans le copolymère est préférentiellement plus de 3 fois plus grand que le taux molaire des unités isoprène sous la configuration 1,4 dans le copolymère.

Selon un mode de réalisation de l'invention, le copolymère contient des unités isoprène sous la configuration 1,4-trans, ce qui implique que le taux molaire des unités isoprène sous la configuration 1,4-trans est supérieur à 0.

Selon l'un quelconque des modes de réalisation de l'invention, le copolymère est préférentiellement un copolymère statistique.

De préférence, le copolymère conforme à l'invention est un élastomère.

Le copolymère, en particulier lorsqu'il est élastomère, a une température de transition vitreuse inférieure à -35°C, plus préférentiellement comprise entre -60°C et -35°C, encore plus préférentiellement comprise entre -55°C et -40°C.

Le copolymère conforme à l'invention peut être préparé par un procédé qui comprend la copolymérisation d'éthylène et d'isoprène en présence d'un système catalytique à base au moins d'un métallocène de formule (I) et d'un organomagnésien de formule (II) :

P(Cp¹Cp²)Nd(BH₄)_{(1+y)-}L_{y}-Nₓ (I)

MgR¹R² (II)

- Cp¹ et Cp², identiques ou différents, étant choisis dans le groupe constitué par les groupes fluorényles substitués et le groupe fluorényle non substitué de formule C₁₃H₈,
- P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
- y, nombre entier, étant égal ou supérieur à 0,
- x, nombre entier ou non, étant égal ou supérieur à 0,
- L représentant un métal alcalin choisi dans le groupe constitué par le lithium, le sodium et le potassium,
- N représentant une molécule d'un éther, de préférence diéthyléther ou tétrahydrofuranne,
- R¹ et R², identiques ou différents, représentant un groupe carboné.

A titre de groupes fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les fluorènes substitués, parce que ces derniers sont disponibles commercialement ou facilement synthétisables.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

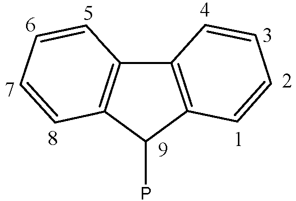

Le système catalytique peut être préparé de façon traditionnelle par un procédé analogue à celui décrit dans les documents WO 2007054224 A1. Par exemple on fait réagir dans un solvant hydrocarboné le dialkylmagnésium et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du copolymère conforme à l'invention.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans les demandes WO 2007054224 A1. Le métallocène peut être préparé de façon traditionnelle par un procédé analogue à celui décrit dans les documents WO 2007054224 A1, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

De préférence, le métallocène est de formule (la), (Ib), (Ic), (Id) ou (le) dans lesquelles le symbole Flu présente le groupe fluorényle de formule C₁₃H₈.

[{Me₂SiFlu₂Nd(µ-BH₄)₂Li(THF)}₂] (Ia)

[Me₂SiFlu₂Nd(µ-BH₄)₂Li(THF)] (Ib)

[Me₂SiFlu₂Nd(µ-BH₄)(THF)] (Ic)

[{Me₂SiFlu₂Nd(p-BH₄)(THF)}₂] (Id)

[Me₂SiFlu₂Nd(p-BH₄)] (le)

L'organomagnésien utile aux besoins de l'invention est de formule MgR¹R² dans laquelle R¹ et R², identiques ou différents, représentent un groupe carboné. On entend par groupe carboné un groupe qui contient un ou plusieurs atomes de carbone. De préférence, R¹ et R² contiennent 2 à 10 atomes de carbone. De manière plus préférentielle, R¹ et R² représentent chacun un alkyle. L'organomagnésien est avantageusement un dialkylmagnésien, mieux le butyléthylmagnésium ou le butyloctylmagnésium, encore mieux le butyloctylmagnésium.

Selon l'un quelconque des modes de réalisation de l'invention, le rapport molaire de l'organomagnésien sur le métal Nd constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées. Selon l'un quelconque des modes de réalisation de l'invention, les copolymères conformes à l'invention présentent de préférence un indice de polymolécularité inférieur à 3.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. La polymérisation est conduite typiquement dans des conditions anhydres et en l'absence d'oxygène, en présence éventuelle d'un gaz inerte. La température de polymérisation varie généralement dans un domaine allant de 30 à 150°C, préférentiellement de 30 à 120°C.

Typiquement, le système catalytique est mis en présence d'un mélange d'éthylène et d'isoprène, la proportion relative de chacun des monomères étant choisie par l'homme du métier en fonction de la proportion souhaitée d'unité éthylène et d'unité isoprène dans le copolymère. La proportion relative de chacun des monomères dans le milieu de polymérisation peut être aussi ajustée par l'homme du métier au cours de la polymérisation selon leur consommation relative, en particulier lorsque la synthèse d'un copolymère statistique est recherchée. L'éthylène et l'isoprène sont ajoutés préférentiellement de façon continue au cours de la copolymérisation.

La polymérisation peut être stoppée par refroidissement du milieu de polymérisation. Le polymère peut être récupéré selon les techniques classiques connues de l'homme du métier comme par exemple par précipitation, par évaporation du solvant sous pression réduite ou par stripping à la vapeur d'eau.

Le copolymère conforme à l'invention, lorsqu'il est élastomère, peut être utilisé dans une composition de caoutchouc.

La composition de caoutchouc, autre objet de l'invention, a pour caractéristique de comprendre l'élastomère conforme à l'invention. Elle contient en outre un système de réticulation ou une charge renforçante.

Le système de réticulation peut être à base de soufre, de donneurs de soufre, de peroxydes, de bismaléimides ou de leurs mélanges. Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus. La composition du système de réticulation et la proportion du système de réticulation dans la composition de caoutchouc sont ajustées par l'homme du métier en fonction de l'usage de la composition de caoutchouc.

Selon un mode de réalisation de l'invention, la composition de caoutchouc comprend une charge renforçante. La composition de caoutchouc peut comprendre tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm. Le taux de charge renforçante est ajusté par l'homme du métier en fonction de l'usage de la composition de caoutchouc.

La composition de caoutchouc peut contenir en outre d'autres additifs connus pour être utilisés dans des compositions de caoutchouc pour pneumatiques, tels que des plastifiants, des anti-ozonants, des antioxydants.

La composition de caoutchouc conforme à l'invention est typiquement fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc conforme à l'invention, pouvant être soit à l'état cru (avant réticulation ou vulcanisation), soit à l'état cuit (après réticulation ou vulcanisation), peut être utilisée dans un article semi-fini pour pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

### Il. EXEMPLES DE REALISATION DE L'INVENTION

Tous les réactifs sont obtenus commercialement excepté les métallocènes [{Me₂SiFlu₂Nd(µ-BH₄)₂Li(THF)}] (métallocène A) et [{Me₂SiCpFluNd(µ-BH₄)₂Li(THF)}] (métallocène B) qui sont préparés selon les mode opératoires décrits dans les documents respectifs WO 2007054224 et WO 2007054223, Cp et Flu représentant respectivement les groupes C₅H₄ et C₁₃H₈.

Le butyloctylmagnésium BOMAG (20% dans l'heptane, C = 0,88 mol L⁻¹) provient de Chemtura et est stocké dans un tube de Schlenk sous atmosphère inerte. L'éthylène, de qualité N35, provient de la société Air Liquide et est utilisé sans purification préalable. L'isoprène et le 1,3-butadiène sont purifiés par passage sur gardes d'alumine.

### 1) Détermination de la microstructure des copolymères :

La caractérisation spectrale et les mesures de la microstructure des copolymères d'éthylène et d'isoprène sont réalisées par spectroscopie de Résonance Magnétique Nucléaire (RMN).
- Spectromètre : Pour ces mesures, un spectromètre Bruker Avance III HD 500 MHz est utilisé, équipé d'une sonde Bruker cryo-BBFO z-grad 5 mm.
- Expériences : Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Cohérence) et HMBC (Heteronuclear Multiple-Bond Correlation) sont enregistrées avec un nombre de répétition de 128 et un nombre d'incréments de 128. Les expériences sont réalisées à 25 °C.
- Préparation de l'échantillon : 25 mg d'échantillon sont solubilisés dans 1 mL de chloroforme deutéré (CDCl3).
- Calibration de l'échantillon : Les axes des déplacements chimiques ¹H et ¹³C sont calibrés par rapport à l'impureté protonée du solvant (CHCl₃) à δ_{1H} = 7,2 ppm et δ_{13C} = 77 ppm.
- Attribution spectrale : Les déplacements chimiques 1H des signaux caractéristiques de cette matrice sont présentés dans le tableau 1.

**Tableau 1 : Attribution des signaux ¹H des copolymères Ethylène-Isoprène**

| motif | structure | δ_{1H} (ppm) |
|---|---|---|
| PI 1-2 | -[CH₂-CMe(CH=CH₂)]- | 5.68 - 5.52 |
| PI 1-4 (cis et trans) | -[CH₂-CMe=CH-CH₂]- | 5.40 - 4.92 |
| PI 3-4 + PI 1-2 | -[CH₂-CH(CMe=CH₂)]- -[CH₂-CMe(CH=CH₂)]- | 4.92 - 4.34 |
| PE | -[CH₂-CH₂]- | 1,18 |

- Microstructure des copolymères d'éthylène et d'isoprène : Les quantifications sont effectuées à partir de l'intégration des signaux des spectres RMN 1D 1H présentés dans le tableau 1 à l'aide du logiciel Topspin. La microstructure est déterminée en pourcentage molaire (% molaire) comme suit : % molaire d'un motif = intégrale 1H normalisée d'un motif*100/Σ (intégrales 1H normalisée de chaque motif)

La microstructure des copolymères d'éthylène et de 1,3-butadiène est déterminée selon la méthode décrite dans les documents WO 2007054223 A1 et WO 2007054224 A1.

### 2) Détermination du taux de cristallinité des copolymères :

La norme ISO 11357-3 :2011 est utilisée pour déterminer la température et l'enthalpie de fusion et de cristallisation des polymères utilisés par analyse calorimétrique différentielle (DSC). L'enthalpie de référence du polyéthylène est de 277,1 J/g (d'après Handbook of Polymer 4th Edition, J. BRANDRUP, E. H. IMMERGUT, and E. A. GRULKE, 1999)

### 3) Détermination de la rigidité des copolymères :

Les mesures sont réalisées sur un rhéomètre Anton Paar modèle MCR301 en mode Cisaillement avec des éprouvettes cylindriques de géométrie maîtrisée (épaisseur comprise entre 1,5mm et 3mm et diamètre compris entre 22mm et 28mm). L'échantillon est soumis à une sollicitation sinusoïdale en cisaillement, à une température fixe (correspondant à la fin du passage de la transition vitreuse de l'élastomère sur un balayage en température à 10Hz), et sur une plage fréquentielle allant de 0.01Hz à 100Hz. La valeur de rigidité retenue comme étant la rigidité du plateau caoutchoutique de l'échantillon est la valeur du module de cisaillement G' pour la fréquence à laquelle le module de perte G" atteint son minimum, conformément à la méthode décrite par C. Liu, J. He, E. van Ruymbeke, R. Keunings, C. Bailly, Evaluation of different methods for the détermination of the plateau modulus and the entanglement molecular weight, Polymer 47 (2006) 4461-4479.

### 4) Détermination de la température de transition vitreuse des copolymères :

La température de transition vitreuse est mesurée au moyen d'un calorimètre différentiel ("Differential Scanning Calorimeter") selon la norme ASTM D3418 (1999).

### 5) Détermination de la macrostructure des copolymères par chromatographie d'exclusion stérique (SEC) :

### a) Principe de la mesure:

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

### b) Préparation du polymère:

Il n'y a pas de traitement particulier de l'échantillon de polymère avant analyse. Celui-ci est simplement solubilisé dans du (tétrahydrofuranne + 0.1% en volume d'eau distillée) à une concentration d'environ 1 g/l. Puis la solution est filtrée sur un filtre de porosité 0.45µm avant injection.

### c) Analyse SEC:

L'appareillage utilisé est un chromatographe « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### 6) Rhéométrie :

Les mesures sont effectuées à 140°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction vulcanisation. Les mesures sont traitées selon la norme DIN 53529 - partie 2 (mars 1983). Les mesures sont traitées selon la norme DIN 53529 - partie 2 (mars 1983). Tα (par exemple T90) est le temps nécessaire pour atteindre une conversion de α%, c'est-à-dire α% (par exemple 90%) de l'écart entre les couples minimum et maximum. Le résultat pour une composition donnée est exprimé par le ratio entre le Tα de la composition donnée et celui d'une composition témoin, ratio étant multiplié par 100.

### 7) Synthèse de copolymères d'éthylène et de 1,3-butadiène :

Trois copolymères d'éthylène et de 1,3-butadiène à fort taux d'éthylène, respectivement les copolymères A, B1 et B2, connus de l'état de la technique, ont été préparés. Le copolymère A est préparé en présence d'un système catalytique à base du métallocène A [Me₂SiCpFluNd(µ-BH₄)₂Li(THF)] et les copolymères B1 et B2 sont préparés en présence d'un système catalytique à base du métallocène B [Me₂Si(Flu)₂Nd(µ-BH₄)₂Li(THF)] selon les modes opératoires décrits dans les documents WO 2007054223 et WO 2007054224.

### 7.1-Synthèse du copolymère A : exemple 1

Le polymère est synthétisé selon le mode opératoire suivant :
Dans un réacteur en verre de 500 ml contenant 300 ml de toluène, on ajoute le co-catalyseur le butyloctylmagnésium (BOMAG), puis le métallocène A [Me₂SiCpFluNd(µ-BH₄)₂Li(THF)]. La durée d'alkylation est de 10 minutes, la température de réaction est de 20 °C. Les quantités respectives des constituants du système catalytique figurent dans le tableau 1.

Ensuite, les monomères sont ajoutés selon les proportions respectives indiquées dans le tableau 1, l'éthylène (Eth) et le 1,3-butadiène (Bde) étant sous la forme d'un mélange gazeux. La polymérisation est conduite à 80°C et à une pression constante de 4 bars. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. La masse pesée permet de déterminer l'activité catalytique moyenne du système catalytique exprimée en kilogramme de polymère synthétisé par mole de métal néodyme et par heure (kg/mol.h).

### 7.2- Synthèse du copolymère B1 : exemple 2

Dans un réacteur en verre de 500 ml contenant 300 ml de méthylcyclohexane, on ajoute le co-catalyseur, le butyloctylmagnésium (BOMAG) puis le métallocène B [Me₂Si(Flu)₂Nd(µ-BH₄)₂Li(THF)]. La durée d'alkylation est de 10 minutes, la température de réaction est de 20 °C. Les quantités respectives des constituants du système catalytique figurent dans le tableau 1.

Ensuite, les monomères sont ajoutés selon les proportions respectives indiquées dans le tableau 1, l'éthylène (Eth) et le 1,3-butadiène (Bde) étant sous la forme d'un mélange gazeux. La polymérisation est conduite à 80°C et à une pression constante de 4 bars.

La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. La masse pesée permet de déterminer l'activité catalytique moyenne du système catalytique exprimée en kilogramme de polymère synthétisé par mole de métal néodyme et par heure (kg/mol.h).

### 7.3- Synthèse du copolymère B2 : exemple 3

Dans un réacteur contenant du méthylcyclohexane, on ajoute le co-catalyseur, le butyloctylmagnésium (BOMAG) puis le métallocène B. La durée d'alkylation est de 10 minutes, la température de réaction est de 20 °C. Les quantités respectives des constituants du système catalytique figurent dans le tableau 1.

Ensuite, les monomères sont ajoutés de manière continue selon les quantités respectives indiquées dans le tableau 1. La polymérisation est conduite selon les conditions de température et de pression constante également indiquées dans le tableau 1. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. La masse pesée permet de déterminer l'activité catalytique moyenne du système catalytique exprimée en kilogramme de polymère synthétisé par mole de métal néodyme et par heure (kg/mol.h).

### 8.- Synthèse de copolymères d'éthylène et d'isoprène : exemples 4 à 6

Les copolymères 1 à 3 conformes à l'invention sont synthétisés selon le mode opératoire suivant :
Dans un réacteur contenant du méthylcyclohexane, on ajoute le co-catalyseur, le butyloctylmagnésium (BOMAG) puis le métallocène B. La durée d'alkylation est de 10 minutes, la température de réaction est de 20 °C. Les quantités respectives des constituants du système catalytique figurent dans le tableau 1.

Ensuite, les monomères sont ajoutés de manière continue selon les quantités respectives indiquées dans le tableau 1. La polymérisation est conduite selon les conditions de température et de pression constante également indiquées dans le tableau 1. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. La masse pesée permet de déterminer l'activité catalytique moyenne du système catalytique exprimée en kilogramme de polymère synthétisé par mole de métal néodyme et par heure (kg/mol.h).

### 9) Préparation des compositions de caoutchouc :

Deux compositions de caoutchouc C1 et C2 sont préparées. Leur formulation est donnée dans le tableau 2.

Pour la fabrication des compositions de caoutchouc, on procède de la manière suivante : on introduit dans un mélangeur interne (taux de remplissage final : environ 70% en volume), dont la température initiale de cuve est d'environ 110°C, l'élastomère diénique, puis la charge renforçante, ainsi que les divers autres ingrédients à l'exception du système de vulcanisation. On conduit alors un travail thermomécanique (phase non-productive) en une étape, qui dure environ 5 min à 6 minutes, jusqu'à atteindre une température maximale de « tombée » de 160°C. On récupère le mélange ainsi obtenu, on le refroidit puis on incorpore du soufre et un accélérateur type sulfénamide sur un mélangeur (homo-finisseur) à 25°C, en mélangeant le tout (phase productive) pendant un temps approprié (par exemple entre 5 et 12 min).

Les compositions ainsi obtenues sont ensuite calandrées sous forme de plaques (d'une épaisseur allant de 2 à 3 mm) ou fines feuilles de caoutchouc, pour la mesure de leurs propriétés physiques ou mécaniques.

La composition de caoutchouc C2 est une composition de caoutchouc conforme à l'invention, puisqu'elle contient un élastomère diénique selon l'invention, le copolymère 1 de l'exemple 4. La composition de caoutchouc C1 est une composition de caoutchouc témoin, car elle contient l'élastomère E1, le copolymère B2 de l'exemple 3.

### 10) Résultats :

Les activités catalytiques moyennes du système catalytique pour chacune des synthèses de copolymères réalisées figurent dans le tableau 1. Les caractéristiques des copolymères synthétisés figurent dans le tableau 3. Les propriétés rhéométriques des compositions de caoutchouc figurent dans le tableau 4.

Comparés aux copolymères A, B1 et B2, les copolymères 1 à 3 sont produits avec une activité catalytique bien supérieure. Les copolymères conformes à l'invention se révèlent plus avantageux que leurs homologues que sont les copolymères d'éthylène et de 1,3-butadiène, du point de vue de la productivité d'une unité de production de polymère.

Les exemples 1 à 3 montrent que pour des taux d'éthylène supérieurs à 70% dans les copolymères, les copolymères d'éthylène et de 1,3-butadiène sont fortement cristallins (cristallinité supérieure à 30%) à moins de contenir des unités de structure cyclique comme le 1,2-cyclohexanediyle. A contrario, les copolymères conformes à l'invention (exemples 4 à 6), même pour des taux d'éthylène bien supérieurs au copolymère de l'exemple 1, sont bien moins cristallins. Ils présentent une cristallinité comparable, voire même inférieure à celle des copolymères d'éthylène et de 1,3-butadiène contenant des unités cycliques 1,2-cyclohexanediyles (exemples 2 et 3). Plus particulièrement, le copolymère 3 conforme à l'invention, même avec un taux molaire d'éthylène approchant 80%, est quasiment non cristallin.

Le tableau 4 montre que la composition C2 selon l'invention présente un T90 inférieur de 10 points, ce qui permet de réduire de 10% le temps de cuisson sous presse de la composition.

En résumé, les copolymères conformes à l'invention présentent un compromis de propriétés plus intéressant que leurs homologues que sont les copolymères d'éthylène et de 1,3-butadiène. Les compositions de caoutchouc également conformes à l'invention qui comportent des copolymères selon l'invention présentent également des propriétés de cuisson améliorées.

**Tableau 1**

| Conditions de copolymérisation | Exemple 1 Copolymère A | Exemple 2 Copolymère B1 | Exemple 3 Copolymère B2 | Exemple 4 Copolymère 1 | Exemple 5 Copolymère 2 | Exemple 6 Copolymère 3 |
|---|---|---|---|---|---|---|
| Température (°C) | 80 | 80 | 80 | 40 | 40 | 80 |
| Pression (bar) | 4 | 4 | 8 | 8 | 8 | 8 |
| Concentration en métallocène (mmol/L) | 0.32 | 0.15 | 0.07 | 0.05 | 0.05 | 0.06 |
| Concentration en co-catalyseur (mmol/L) | 0.97 | 0.8 | 0.36 | 0.22 | 0.22 | 0.26 |
| Composition mélange gazeux alimentation (%mol Eth/Bde) | 80/20 | 80/20 | 80/20 | - | - | - |
| Composition alimentation (% mol éthylène/isoprene) | - | - | - | 75/25 | 60/40 | 70/30 |
| Activité catalytique (kg/mol.h) | 92 | 134 | 500 | 706 | 707 | 1250 |

**Tableau 2**

| Composition | C1 | C2 |
|---|---|---|
| E1 (1) | 100 | - |
| E2 (2) | - | 100 |
| Noir de carbone (3) | 40 | 40 |
| Antioxydant (4) | 2 | 2 |
| Acide stéarique (5) | 1.5 | 1.5 |
| Cire paraffine | 1 | 1 |
| ZnO (6) | 2.5 | 2.5 |
| S | 0.56 | 0.56 |
| CBS (7) | 1.26 | 1.26 |

| | | |
|---|---|---|
| (1 ) copolymère B2 de l'exemple 3 (2 ) copolymère 1 de l'exemple 4 (3 ) N234 (4 )N-1,3-diméthylbutyl-N-phényl-para-phenyldiamine (« Santoflex 6-PPD » de la société Flexsys) (5 ) Stéarine « Pristerene 4931 » de la société Uniquema (6 ) Oxyde de Zinc de grade industriel de la société Umicore (7 ) N-cyclohexyl-2-benzothiazyl-sulfénamide de la société Flexsys | | |

**Tableau 3**

| Caractéristiques copolymère | Exemple 1 | Exemple 2 | Exemple 3 | Exemple 4 | Exemple 5 | Exemple 6 |
|---|---|---|---|---|---|---|
| unité éthylène (%mol) | 73.7 | 71 | 78.3 | 80.7 | 71.8 | 77,1 |
| unité butadiène 1.2+1.4 (%mol) | 26.3 | 16 | 13.7 | - | - | - |
| unité 1,2-cyclohexanediyle (%mol) | - | 13 | 8 | - | - | - |
| unité isoprène (%mol) | - | - | - | 19.3 | 28.2 | 22,9 |
| unité isoprène 3,4 (% mol) | - | - | - | 15.7 | 23 | 17,1 |
| unité isoprène 1,2 (% mol) | - | - | - | 0.3 | 0.4 | 0,4 |
| unité isoprène 1,4 (% mol) | - | - | - | 3.3 | 4.8 | 5,4 |
| unité isoprène 1,4-trans/unité isoprène | - | - | - | 17% | 17% | 23.5% |
| unité isoprène 3,4 /unité isoprène | | | | 81% | 81% | 74% |
| unité isoprène 3,4 et 1,2/unité isoprène | - | - | - | 83% | 83% | 76.5% |
| cristallinité (%) | 31 | 0 | 5 | 7 | 0 | <1 |
| Mn (g/mol) | - | 62600 | 181000 | 120000 | 92000 | 56000 |
| Ip | - | - | 1.45 | 2.29 | 1.89 | 2.03 |
| Tg / ΔT | -54 | -35 | -40/9 | -45/8 | -45/5 | -48/6 |
| rigidité (MPa) | - | - | 1.2 | 1.2 | 1.1 | 1.2 |

**Tableau 4**

| Composition | C1 | C2 |
|---|---|---|
| T90 | 100 | 90 |

## Revendications

1. Copolymère d'éthylène et d'isoprène, lequel copolymère comprend de 10 à 35% en mole d'unité isoprène dont au moins 70% sont sous la configuration 3,4 et une partie est sous la configuration 1,2, lequel copolymère a une température de transition vitreuse inférieure à -35°C.

2. Copolymère selon la revendication 1 dans lequel les unités isoprène sous la configuration 3,4 et les unités isoprène sous la configuration 1,2 représentent au moins 75% en mole des unités isoprène du copolymère.

3. Copolymère selon l'une quelconque des revendications 1 à 2, lequel copolymère contient des unités isoprène sous la configuration 1,4-trans.

4. Copolymère selon l'une quelconque des revendications 1 à 3 dans lequel les unités isoprène représentent de 15 à 30% en mole des unités isoprène et des unités éthylène.

5. Copolymère selon l'une quelconque des revendications 1 à 4, lequel copolymère est un copolymère statistique.

6. Copolymère selon l'une quelconque des revendications 1 à 5, lequel copolymère a une température de transition vitreuse comprise entre -60°C et -35°C, de préférence entre - 55°C et -40°C.

7. Copolymère selon l'une quelconque des revendications 1 à 6, lequel copolymère est un élastomère.

8. Procédé de préparation d'un copolymère d'éthylène et d'isoprène défini à l'une quelconque des revendications 1 à 7 qui comprend la copolymérisation d'éthylène et d'isoprène en présence d'un système catalytique à base au moins d'un métallocène de formule (I) et d'un organomagnésien de formule (II)
P(Cp¹Cp²)Nd(BH₄)_{(1+y)-}L_{y}-Nₓ (I)
MgR¹R² (II)
Cp¹ et Cp², identiques ou différents, étant choisis dans le groupe constitué par les groupes fluorényles substitués et le groupe fluorényle non substitué de formule C₁₃H₈,
P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0,
L représentant un métal alcalin choisi dans le groupe constitué par le lithium, le sodium et le potassium,
N représentant une molécule d'un éther, de préférence diéthyléther ou tétrahydrofuranne,
R¹ et R², identiques ou différents, représentant un groupe carboné.

9. Procédé selon la revendication 8 dans lequel le métallocène est de formule (Ia), (Ib), (Ic), (Id) ou (le)
[{Me₂SiFlu₂Nd(µ-BH₄)₂Li(THF)}₂] (Ia)
[Me₂SiFlu₂Nd(µ-BH₄)₂Li(THF)] (Ib)
[Me₂SiFlu₂Nd(µ-BH₄)(THF)] (Ic)
[{Me₂SiFlu₂Nd(p-BH₄)(THF)}₂] (Id)
[Me₂SiFlu₂Nd(p-BH₄)] (Ie)
le symbole Flu présentant le groupe fluorényle de formule C₁₃H₈.

10. Procédé selon l'une quelconque des revendications 8 à 9 dans lequel R¹ et R² contiennent 2 à 10 atomes de carbone.

11. Procédé selon l'une quelconque des revendications 8 à 10 dans lequel R¹ et R² représentent chacun un alkyle.

12. Procédé selon l'une quelconque des revendications 8 à 11 dans lequel l'organomagnésien est un dialkylmagnésien, de préférence le butyléthylmagnésium ou le butyloctylmagnésium, de manière plus préférentielle le butyloctylmagnésium.

13. Procédé selon l'une quelconque des revendications 8 à 12, dans lequel l'éthylène et l'isoprène sont ajoutés de façon continue au cours de la copolymérisation.

14. Composition de caoutchouc qui comprend l'élastomère défini à la revendication 7, laquelle composition de caoutchouc comprend un système de réticulation ou une charge renforçante.

15. Pneumatique qui comprend une composition de caoutchouc définie à la revendication14.

## Patentansprüche

1. Copolymer von Ethylen und Isopren, wobei das Copolymer 10 bis 35 Mol-% Isopren-Einheiten umfasst, von denen mindestens 70 % in der 3,4-Konfiguration vorliegen und ein Teil in der 1,2-Konfiguration vorliegt, wobei das Copolymer eine Glasübergangstemperatur von weniger als - 35 °C aufweist.

2. Copolymer nach Anspruch 1, wobei die Isopren-Einheiten in der 3,4-Konfiguration und die Isopren-Einheiten in der 1,2-Konfiguration mindestens 75 Mol-% der Isopren-Einheiten des Copolymers ausmachen.

3. Copolymer nach einem der Ansprüche 1 bis 2, wobei das Copolymer Isopren-Einheiten in der 1,4-trans-Konfiguration aufweist.

4. Copolymer nach einem der Ansprüche 1 bis 3, wobei die Isopren-Einheiten 15 bis 30 Mol-% der Isopren-Einheiten und der Ethylen-Einheiten ausmachen.

5. Copolymer nach einem der Ansprüche 1 bis 4, wobei es sich bei dem Copolymer um ein statistisches Copolymer handelt.

6. Copolymer nach einem der Ansprüche 1 bis 5, wobei das Copolymer eine Glasübergangstemperatur zwischen -60 °C und -35 °C, vorzugsweise zwischen -55 °C und -40 °C, aufweist.

7. Copolymer nach einem der Ansprüche 1 bis 6, wobei es sich bei dem Copolymer um ein Elastomer handelt.

8. Verfahren zur Herstellung eines Copolymer von Ethylen und Isopren gemäß einem der Ansprüche 1 bis 7, dass die Copolymerisation von Ethylen und Isopren in Gegenwart eines katalytischen Systems auf Basis von mindestens einem Metallocen der Formel (I) und einer Organomagnesiumverbindung der Formel (II) umfasst,
P(Cp¹Cp²)Nd(BH₄)_{(1+y)-}L_{y}-Nₓ (I)
MgR¹R² (II)
wobei Cp¹ und Cp² gleich oder verschieden sind und aus der Gruppe bestehend aus substituierten Fluorenylgruppen und der unsubstituierten Fluorenylgruppe der Formel C₁₃H₈ ausgewählt sind,
wobei P eine die beiden Gruppen Cp¹ und Cp² verbrückende Gruppe ist und für eine Gruppe ZR³R⁴ steht, wobei Z für ein Silicium- oder Kohlenstoffatom steht und R³ und R⁴ gleich oder verschieden sind und jeweils für eine Alkylgruppe mit 1 bis 20 Kohlenstoffatomen, vorzugsweise ein Methyl, stehen,
wobei y ganzzahlig ist und gleich oder größer als 0 ist,
wobei x ganzzahlig oder nicht ganzzahlig ist und gleich oder größer als 0 ist,
wobei L für ein Alkalimetall, das aus der Gruppe bestehend aus Lithium, Natrium und Kalium ausgewählt ist, steht,
wobei N für ein Molekül eines Ethers, vorzugsweise Diethylether oder Tetrahydrofuran, steht,
R¹ und R² gleich oder verschieden sind und für eine Kohlenstoffgruppe stehen.

9. Verfahren nach Anspruch 8, wobei das Metallocen die Formel (la), (Ib), (Ic), (Id) oder (Ie) aufweist:
[{Me₂SiFlu₂Nd(µ-BH₄)₂Li(THF)}₂] (Ia)
[Me₂SiFlu₂Nd(µ-BH₄)₂Li(THF)] (Ib)
[Me₂SiFlu₂Nd(µ-BH₄)(THF)] (Ic)
[{Me₂SiFlu₂Nd(µ-BH₄)(THF)}₂] (Id)
[Me₂SiFlu₂Nd(µ-BH₄)] (Ie)
wobei das Symbol Flu für die Fluorenylgruppe der Formel C₁₃H₈ steht.

10. Verfahren nach einem der Ansprüche 8 bis 9, wobei R¹ und R² 2 bis 10 Kohlenstoffatome enthalten.

11. Verfahren nach einem der Ansprüche 8 bis 10, wobei R¹ und R² jeweils für ein Alkyl stehen.

12. Verfahren nach einem der Ansprüche 8 bis 11, wobei es sich bei der Organomagnesiumverbindung um eine Dialkylmagnesiumverbindung, vorzugsweise Butylethylmagnesium oder Butyloctylmagnesium, weiter bevorzugt Butyloctylmagnesium, handelt.

13. Verfahren nach einem der Ansprüche 8 bis 12, wobei das Ethylen und das Isopren im Lauf der Copolymerisation kontinuierlich zugegeben werden.

14. Kautschukzusammensetzung, die das Elastomer gemäß Anspruch 7 umfasst, wobei die Kautschukzusammensetzung ein Vernetzungssystem oder einen verstärkenden Füllstoff umfasst.

15. Reifen, der eine Kautschukzusammensetzung gemäß Anspruch 14 umfasst.

## Claims

1. Copolymer of ethylene and of isoprene, which copolymer comprises from 10 to 35 mol% of isoprene units, at least 70% of which are in the 3,4 configuration and a portion of which is in the 1,2 configuration, which copolymer has a glass transition temperature of less than -35°C.

2. Copolymer according to Claim 1, in which the isoprene units in the 3,4 configuration and the isoprene units in the 1,2 configuration represent at least 75 mol% of the isoprene units of the copolymer.

3. Copolymer according to either one of Claims 1 and 2, which copolymer contains isoprene units in the 1,4-trans configuration.

4. Copolymer according to any one of Claims 1 to 3, in which the isoprene units represent from 15 to 30 mol% of the isoprene units and of the ethylene units.

5. Copolymer according to any one of Claims 1 to 4, which copolymer is a random copolymer.

6. Copolymer according to any one of Claims 1 to 5, which copolymer has a glass transition temperature of between -60°C and -35°C, preferably between -55°C and -40°C.

7. Copolymer according to any one of Claims 1 to 6, which copolymer is an elastomer.

8. Process for the preparation of a copolymer of ethylene and of isoprene defined in any one of Claims 1 to 7, which comprises the copolymerization of ethylene and of isoprene in the presence of a catalytic system based at least on a metallocene of formula (I) and on an organomagnesium compound of formula (II)
P(Cp¹Cp²)Nd(BH₄)_{(1+y)-}L_{y}-Nₓ (I)
MgR¹R² (II)
Cp¹ and Cp², which are identical or different, being selected from the group consisting of substituted fluorenyl groups and the unsubstituted fluorenyl group of formula C₁₃H₈,
P being a group bridging the two Cp¹ and Cp² groups and representing a ZR³R⁴ group, Z representing a silicon or carbon atom, R³ and R⁴, which are identical or different, each representing an alkyl group comprising from 1 to 20 carbon atoms, preferably a methyl,
y, which is an integer, being equal to or greater than 0,
x, which is or is not an integer, being equal to or greater than 0,
L representing an alkali metal selected from the group consisting of lithium, sodium and potassium,
N representing a molecule of an ether, preferably diethyl ether or tetrahydrofuran,
R¹ and R², which are identical or different, representing a carbon group.

9. Process according to Claim 8, in which the metallocene is of formula (Ia), (Ib), (Ic), (Id) or (le)
[{Me₂SiFlu₂Nd(µ-BH₄)₂Li(THF)}₂] (Ia)
[Me₂SiFlu₂Nd(µ-BH₄)₂Li(THF)] (Ib)
[Me₂SiFlu₂Nd(µ-BH₄)(THF)] (Ic)
[{Me₂SiFlu₂Nd(µ-BH₄)(THF)}₂] (Id)
[Me₂SiFlu₂Nd(µ-BH₄)] (Ie)
the symbol Flu presenting the fluorenyl group of formula C₁₃H₈.

10. Process according to either one of Claims 8 and 9, in which R¹ and R² contain from 2 to 10 carbon atoms.

11. Process according to any one of Claims 8 to 10, in which R¹ and R² each represent an alkyl.

12. Process according to any one of Claims 8 to 11, in which the organomagnesium compound is a dialkylmagnesium compound, preferably butylethylmagnesium or butyloctylmagnesium, more preferentially butyloctylmagnesium.

13. Process according to any one of Claims 8 to 12, in which the ethylene and the isoprene are added continuously during the copolymerization.

14. Rubber composition which comprises the elastomer defined in Claim 7, which rubber composition comprises a crosslinking system or a reinforcing filler.

15. Tyre which comprises a rubber composition defined in Claim 14.
